# EUROPEAN PATENT APPLICATION

(11) **EP 4 206 559 A1**
(43) Date of publication of application: **05.07.2023**
(21) Application number: 21218459.2
(22) Date of filing: 31.12.2021
(51) Int. Cl.: F25B 21/00, F25B 9/14, F25B 9/12, F25B 9/02, F25B 9/00, F25D 19/00, F17C 13/08

(54) **CRYOGENIC APPARATUS**

(71) Applicant: kiutra GmbH, 81369 München (DE)
(72) Inventor: Hefele, Rafael, Munich (DE); Eibensteiner, Klaus, Munich (DE)
(74) Representative: Legl, Stefan

(57) **Abstract**

The present disclosure relates to a cryogenic apparatus (300, 400, 500), comprising: at least one first temperature change mechanism (310, 410) connected to a sample stage (20) and configured to change a temperature at the sample stage (20); at least one second temperature change mechanism (320, 420, 520, 522) different from the at least one first temperature change mechanism (310, 410), wherein the at least one second temperature change mechanism (320, 420, 520, 522) is connected to the sample stage (20) and configured to change the temperature at the sample stage (20); and a controller. The controller is configured to: operate the at least one first temperature change mechanism (310, 410) in a first temperature range (A); operate the at least one second temperature change mechanism (320, 420, 520, 522) in a second temperature range (B) different from the first temperature range (A); and operate both the at least one first temperature change mechanism (310, 410) and the at least one second temperature change mechanism (320, 420, 520, 522) in a third temperature range (C) between the first temperature range (A) and the second temperature range (B).

## Description

### FIELD

The present disclosure relates to a cryogenic apparatus, a method of controlling a cryogenic apparatus, and a controller for a cryogenic apparatus. More particularly, the present disclosure relates to an adiabatic demagnetization apparatus that provides continuous temperature control over an extended temperature range, e.g., from room temperature to ultra-low temperatures in the sub-Kelvin or milli-Kelvin range.

### BACKGROUND

A cryostat is generally used to maintain low temperatures of samples mounted within the cryostat. Low temperatures may be achieved by using, for example, a cryogenic fluid bath such as liquid helium. However, the cooling medium, such as liquid helium, continuously evaporates due to external and/or internal heat input in the cryostat and therefore needs to be refilled regularly. This requires considerable time and resources, whereby the operating costs of such cryostats are high.

In order to overcome the above drawbacks, cryogen-free cryostats have been developed. Cryogen-free cryostats may employ a cryogen-free closed cycle system, such a pulse tube cryocooler. Modern pulse tube cryocoolers can achieve temperatures down to 1.2K. In order to achieve sub-Kelvin temperatures, a magnetic cooling stage can be used in addition to the cryogen-free closed cycle system. The magnetic cooling stage may be an adiabatic demagnetization refrigerator (ADR), which can achieve temperatures down to a few milli-Kelvin. ADR is based on the magneto-caloric effect. When a medium is magnetized, its magnetic moments get aligned and the heat of magnetization is released. Vice versa, if the medium is demagnetized its temperature drops.

Conventional ADR systems are operated in single-shot mode. This means that low temperatures are achieved only for a short time and are not maintained stably for a longer time. However, in many applications it is considered beneficial to maintain low temperatures, e.g., in the sub-Kelvin range for a long time and in a stable manner. Furthermore, in some applications it is necessary to continuously change a sample temperature, for example, from room temperature to ultra-low temperatures in the sub-Kelvin range. However, seamless control of temperature ramps over such large ranges is challenging, especially due to the operational limitations of ADR technology above certain temperature limits.

In view of the above, new cryogenic apparatuses, methods of controlling a cryogenic apparatus, and controllers for a cryogenic apparatus that overcome at least some of the problems in the art are beneficial.

### SUMMARY

In light of the above, a cryogenic apparatus, a method of controlling a cryogenic apparatus, a machine readable medium, and a controller for a cryogenic apparatus are provided.

It is an object of the present disclosure to provide a cryogenic apparatus, a method of controlling a cryogenic apparatus, a machine readable medium, and a controller for a cryogenic apparatus, which provide a seamless control of temperature ramps over large ranges, in particular from room temperature to ultra-low temperatures in the sub-Kelvin range. Further aspects, benefits, and features of the present disclosure are apparent from the claims, the description, and the accompanying drawings.

According to an independent aspect of the present disclosure, a cryogenic apparatus, such as an adiabatic demagnetization apparatus, is provided. The cryogenic apparatus includes at least one first temperature change mechanism connectable or connected to a sample stage and configured to change a temperature at (or of) the sample stage; at least one second temperature change mechanism different from the at least one first temperature change mechanism, wherein the at least one second temperature change mechanism is connectable or connected to the sample stage and configured to change the temperature at (or of) the sample stage; and a controller.

According to some embodiments, which can be combined with other embodiments described herein, the controller is configured to operate the at least one first temperature change mechanism in a first temperature range; operate the at least one second temperature change mechanism in a second temperature range different from the first temperature range; and operate both the at least one first temperature change mechanism and the at least one second temperature change mechanism in a third temperature range between the first temperature range and the second temperature range.

The at least one first temperature change mechanism is not operated in the second temperature range to change the temperature at the sample stage. Similarly, the at least one second temperature change mechanism is not operated in the first temperature range to change the temperature at the sample stage. In the third temperature range, the at least one first temperature change mechanism and the at least one second temperature change mechanism are operated, particularly simultaneously, to change the temperature at the sample stage.

According to some embodiments, which can be combined with other embodiments described herein, the controller is configured to operate or prepare the at least one second temperature change mechanism during at least a part of the first temperature range for the temperature change operation. For example, the at least one second temperature change mechanism can be operated in at least a part of the first temperature range (adjacent to or bordering the third temperature range) in a stand-by mode and/or a preparation mode.

Additionally, or alternatively, the controller can be configured to operate or prepare the at least one first temperature change mechanism during at least a part of the second temperature range for the temperature change operation. For example, the at least one first temperature change mechanism can be operated in at least a part of the second temperature range (adjacent to or bordering the third temperature range) in a stand-by mode and/or a preparation mode.

According to some embodiments, which can be combined with other embodiments described herein, the at least one first temperature change mechanism and the at least one second temperature change mechanism are selected from the group including (or consisting of) an active heating mechanism, a passive heating mechanism, an active cooling mechanism, passive cooling mechanism, and combinations thereof (e.g., a heating and cooling mechanism).

According to some embodiments, which can be combined with other embodiments described herein, the at least one first temperature change mechanism is a heating mechanism. For example, the at least one first temperature change mechanism may be a resistive heater.

According to some embodiments, which can be combined with other embodiments described herein, the at least one second temperature change mechanism is a heating and cooling mechanism. For example, the at least one second temperature change mechanism can include, or be, an adiabatic demagnetization refrigerator (ADR) which is configured for magnetic cooling and magnetic heating.

According to some embodiments, which can be combined with other embodiments described herein, the at least one first temperature change mechanism and the at least one second temperature change mechanism are of a different functional type.

For example, the at least one first temperature change mechanism can include at least one heater, e.g., at least one resistive heater. Additionally, or alternatively, the at least one second temperature change mechanism can include at least one ADR stage.

Preferably, the at least one second temperature change mechanism includes one or more single-stage ADRs.

Alternatively, the at least one second temperature change mechanism includes one or more multi-stage ADRs. Preferably, the stages of each multi-stage ADR are connectable in series, for example by thermal switches.

According to some embodiments, which can be combined with other embodiments described herein, the at least one first temperature change mechanism and the at least one second temperature change mechanism are of a same functional type.

For example, the at least one first temperature change mechanism can have at least one first operational characteristic and the at least one second temperature change mechanism can have at least one second operational characteristic different from the at least one first operational characteristic.

Preferably, the at least one first temperature change mechanism includes at least one first heater, in particular at least one first resistive heater, having the at least one first operational characteristic, and the at least one second temperature change mechanism includes at least one second heater, in particular at least one second resistive heater, having the at least one second operational characteristic.

Preferably, the at least one first operational characteristic and the at least one second operational characteristic are selected from the group including (or consisting of) a heating power, a maximal heating power, an operational limit of the temperature change mechanism, a size of the temperature change mechanism, a heat input characteristic to the sample stage, and combinations thereof.

According to some embodiments, which can be combined with other embodiments described herein, the cryogenic apparatus further includes a thermal reservoir connectable to the sample stage.

Preferably, the thermal reservoir is configured to act as a heat sink.

According to some embodiments, which can be combined with other embodiments described herein, the thermal reservoir is a passive cooling unit, such as a passive pre-cooling unit or bath.

According to some embodiments, which can be combined with other embodiments described herein, the thermal reservoir is provided by a closed-cycle cryocooler (e.g., a pulse tube refrigerator) and/or an ADR system and/or a liquid Helium bath and/or a Stirling cryocooler and/or a Gifford-McMahon (GM) cryocooler and/or a dilution refrigerator and/or a Joule Thompson cooler and/or a He-4 flow cryostat and/or a He-3 flow cryostat. However, the present disclosure is not limited thereto and other techniques to provide the thermal reservoir can be used.

According to some embodiments, which can be combined with other embodiments described herein, the cryogenic apparatus includes at least one heat switch.

Preferably, the at least one heat switch includes at least one first heat switch configured to open and close a thermal connection between the thermal reservoir and the sample stage. In an exemplary embodiment, the at least one first heat switch can be further configured to open and close a thermal connection between the thermal reservoir and the at least one first temperature change mechanism and/or the at least one second temperature change mechanism.

Additionally, or alternatively, the at least one heat switch includes at least one second heat switch configured to open and close a thermal connection between the thermal reservoir and the at least one first temperature change mechanism.

Additionally, or alternatively, the at least one heat switch includes at least one third heat switch configured to open and close a thermal connection between the thermal reservoir and the at least one second temperature change mechanism.

Additionally, or alternatively, the at least one heat switch includes at least one fourth heat switch configured to open and close at least one thermal connection between two or more devices comprised in the at least one second temperature change mechanism, in particular wherein the two or more devices are ADR stages.

According to some embodiments, which can be combined with other embodiments described herein, the at least one heat switch, in particular the at least one first heat switch, is controllable to provide a variable thermal impedance.

According to some embodiments, which can be combined with other embodiments described herein, the controller is configured to operate the at least one first temperature change mechanism and the at least one second temperature change mechanism to ramp the temperature at the sample stage between a first temperature and a second temperature.

Preferably, the first temperature is 10K or higher (or 100K or higher or 200K or higher, or 300K or higher) and the second temperature is 4K or lower (or 1k or lower).

According to a further independent aspect of the present disclosure, a cryostat is provided, including the cryogenic apparatus of the embodiments of the present disclosure.

According to a further independent aspect of the present disclosure, a method of controlling a cryogenic apparatus is provided. The method includes, in a first temperature range, operating only at least one first temperature change mechanism connected to a sample stage to change a temperature at the sample stage; in a second temperature range different from the first temperature range, operating only at least one second temperature change mechanism connected to the sample stage to change the temperature at the sample stage, wherein the at least one second temperature change mechanism is different from the at least one first temperature change mechanism; and in a third temperature range between the first temperature range and the second temperature range, operating both the at least one first temperature change mechanism and the at least one second temperature change mechanism to change the temperature at the sample stage.

According to embodiments described herein, the method can be conducted by means of computer programs, software, computer software products and the interrelated controllers, which can have a CPU, a memory, a user interface, and input and output means being in communication with the corresponding components of the cryogenic apparatus.

According to an independent aspect of the present disclosure, a machine readable medium (e.g., a memory) is provided. The machine-readable medium includes instructions executable by one or more processors to implement the embodiments of the method of controlling a cryogenic apparatus of the present disclosure.

The (e.g., non-transitory) machine readable medium may include, for example, optical media such as CD-ROMs and digital video disks (DVDs), and semiconductor memory devices such as Electrically Programmable Read-Only Memory (EPROM), and Electrically Erasable Programmable Read-Only Memory (EEPROM). The machine-readable medium may be used to tangibly retain computer program instructions or code organized into one or more modules and written in any desired computer programming language. When executed by, for example, one or more processors such computer program code may implement one or more of the methods described herein.

According to an independent aspect of the present disclosure, a controller is provided. The controller includes one or more processors and a memory coupled to the one or more processors and comprising instructions executable by the one or more processors to implement the embodiments of the method of controlling a cryogenic apparatus of the present disclosure.

According to an independent aspect of the present disclosure, a cryogenic apparatus, such as an adiabatic demagnetization apparatus, is provided. The cryogenic apparatus includes the controller.

Embodiments are also directed at apparatuses for carrying out the disclosed methods and include apparatus parts for performing each described method aspect. These method aspects may be performed by way of hardware components, a computer programmed by appropriate software, by any combination of the two or in any other manner. Furthermore, embodiments according to the disclosure are also directed at methods for operating the described apparatus. It includes method aspects for carrying out every function of the apparatus.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows an operation principle of an adiabatic demagnetization refrigerator;
- FIG. 2: shows a schematic view of a multi-stage adiabatic demagnetization refrigerator;
- FIG. 3: shows a cryogenic apparatus according to embodiments of the present disclosure;
- FIG. 4: shows a cryogenic apparatus according to further embodiments of the present disclosure;
- FIG. 5: shows a cryogenic apparatus according to further embodiments of the present disclosure;
- FIG. 6: shows an exemplary temperature ramp according to an embodiment of the present disclosure;
- FIG. 7: shows an exemplary temperature ramp according to a further embodiment of the present disclosure;
- FIG. 8: shows an exemplary temperature ramp according to a further embodiment of the present disclosure; and
- FIG. 9: shows a schematic view of a cryostat having the cryogenic apparatus according to the embodiments of the present disclosure.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

A cryostat is generally used to maintain low temperatures of samples mounted within the cryostat and/or to provide an operational environment. In many applications it is necessary to continuously change a sample temperature, for example, from room temperature to ultra-low temperatures in the sub-Kelvin range, or vice versa. However, seamless control of temperature ramps over such large ranges is challenging, especially due to the operational limitations of ADR technology above certain temperature limits.

The embodiments of the present disclosure overcome the above drawbacks by combining two or more different temperature change mechanisms which are operated individually or in combination based on a temperature range. Thereby, seamless control of temperature ramps over large temperature ranges can be achieved.

For example, a heating mechanism can be used for temperatures above a temperature of a thermal reservoir (e.g., provided by a pre-cooling unit), and an active cooling mechanism (e.g., an adiabatic demagnetization refrigerator) can be used below said temperature. To be able to seamlessly control temperature ramps over both temperature ranges, a smooth hand-off between the two technologies is achieved by using both the heating mechanism and cooling mechanism simultaneously within a transition regime.

In the following description, a heater and an adiabatic demagnetization refrigerator are used as temperature change mechanisms. However, the present disclosure is not limited thereto, and other types of temperature change mechanisms may be combined to achieve the effects and benefits of the present disclosure.

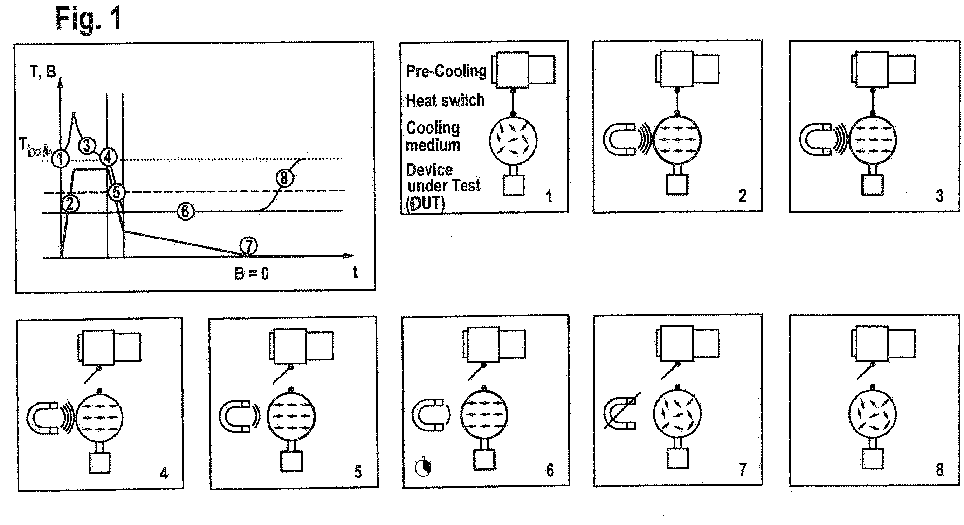

FIG. 1 shows an operation principle of an adiabatic demagnetization refrigerator.

Adiabatic demagnetization refrigeration (ADR) is a cooling method which uses the entropy-dependence of a paramagnetic spin system (e.g., the magnetic moments due to the electronic orbital motion and electron spin, or nuclear spins) to provide low-temperature or ultra-low temperature cooling. The method allows to generate low or ultra-low temperatures of some milli-Kelvin or even some micro-Kelvin. An exemplary implementation of ADR makes use of a single ADR unit which includes a heat switch, a cooling medium, and a magnet. Low or ultra-low temperatures are generated by demagnetizing the cooling medium. An exemplary cooling procedure is shown in more detail in FIG. 1.

In box 1 of FIG. 1, the heat switch is closed, and the cooling medium is coupled to a pre-cooling unit. In box 2, a local magnetic field is increased to maximum, and heat of magnetization is released, whereby the sample is heated. In box 3, thermalization takes place and the heat of magnetization is removed by means of the pre-cooling unit. In box 4, the heat switch is open, and the magnetic field is still applied. In box 5, the magnetic field is reduced, and the sample is cooled. In box 6, the sample temperature is constant, and the magnetic field is decreased. In box 7, the magnetic field is zero and the cooling process terminates. In box 8, the sample warms up to base temperature.

ADRs can be operated in a single-shot mode, e.g., using a single ADR unit. The single-shot mode can achieve low temperatures only short-term and not continuously. Such a short-term cooling may limit the use and commercial application of ADR. Instead, He-3 based techniques, such as dilution refrigerators, are often used for providing sub-Kelvin temperatures in a continuous manner.

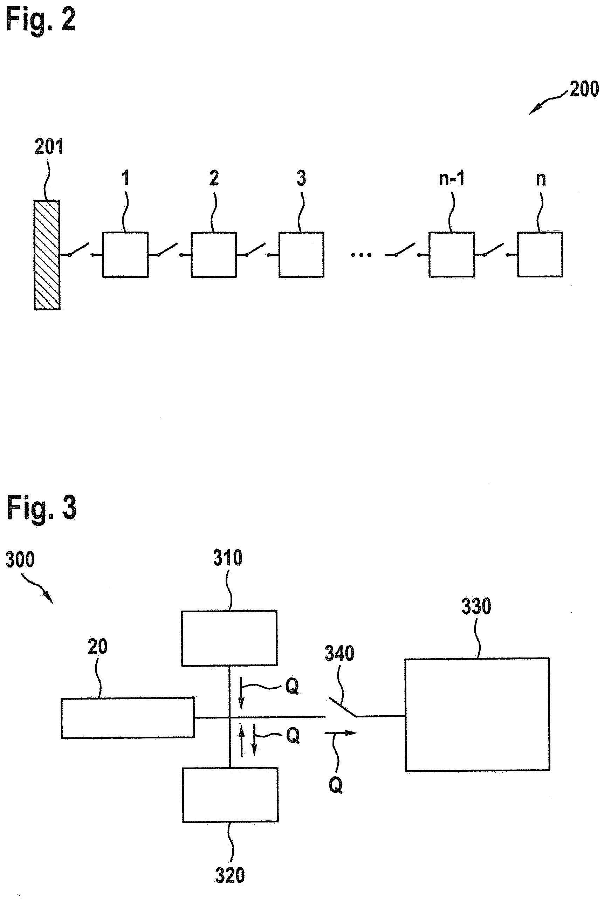

FIG. 2 shows a schematic view of multi-stage adiabatic demagnetization refrigerator 200.

The drawbacks of short-time cooling with ADR may be solved by using multi-stage ADR, i.e., refrigerators which have two or more mutually connected ADR units. Multi-stage ADR can be used to realize continuous magnetic refrigeration, i.e., to provide a cryogenic temperature *T_{target}* for arbitrary long temperatures by means of ADR. This technique is sometimes referred to as CADR (continuous adiabatic demagnetization refrigeration). CADR is particularly useful because low temperatures are generated permanently without the use of liquid cooling media (i.e., cryogens). Particularly, no liquid Helium-4 or Helium-3 is needed.

Each individual ADR unit of the multi-stage adiabatic demagnetization refrigerator 200 may include a paramagnetic cooling medium, a magnet device configured to provide and remove a magnetic field at the position of the paramagnetic cooling medium, and a thermal switch. The magnet device can include, or be, an electromagnet, such as a resistive or superconducting electromagnet, having a magnet power supply connected thereto. The thermal switch, which may also be referred to as "heat switch", is configured to connect and disconnect the paramagnetic cooling medium from a heat bath. The heat bath may be a main thermal bath (e.g., the heat sink 201 in FIG. 2) or another ADR unit.

FIG. 2 illustrates multi-stage ADR where *n* ADR units are connected as a chain using heat switches. By dissipating the heat of magnetization of ADR unit *n* in ADR unit *n-1* it is possible to provide a residual magnetic field and hence cooling power at the last ADR unit *n.* A first ADR unit ("1" in FIG. 2) of the multiple ADR units can be connected to a heat sink 201. The heat sink 201 can be provided by a cryogen-free closed cycle system, such a pulse tube cryocooler. The heat sink 201 can be maintained at an essentially constant temperature e.g. in a range between 1K and 4K. For example, the heat sink 201 can be maintained at an essentially constant temperature of about 4K.

Besides the simple chain schematically illustrated in FIG. 2, more complex configurations of multi-stage ADR including e.g. multiple ADR chains, each having multiple ADR units, can be provided, wherein the ADR chains may be operated in parallel or in series.

In many applications it is necessary to continuously change a sample temperature, for example, from room temperature to ultra-low temperatures in the sub-Kelvin range, or vice versa. However, seamless control of temperature ramps over such large ranges is challenging, especially due to the operational limitations of ADR technology above certain temperature limits.

FIG. 3 shows a cryogenic apparatus 300 according to embodiments of the present disclosure that allows a sample temperature to be continuously varied over a wide range of temperatures.

The cryogenic apparatus 300 includes at least one first temperature change mechanism 310 connectable or connected to a sample stage 20 and configured to change a temperature at (or of) the sample stage 20; at least one second temperature change mechanism 320 different from the at least one first temperature change mechanism 310, wherein the at least one second temperature change mechanism 320 is connectable or connected to the sample stage 20 and configured to change the temperature at (or of) the sample stage; optionally a thermal reservoir 330 connectable or connected to the sample stage 20 and configured to act as a heat sink; and a controller (not shown).

As shown in FIG. 3, the at least one first temperature change mechanism 310 is thermally connectable or connected to the sample stage 20 to allow a transfer of heat Q between the at least one first temperature change mechanism 310 and the sample stage 20. Similarly, the at least one second temperature change mechanism 320 is thermally connectable or connected to the sample stage 20 to allow a transfer of heat Q between the at least one second temperature change mechanism 320 and the sample stage 20. Finally, the thermal reservoir 330 is thermally connectable or connected to the sample stage 20 and/or the at least one first temperature change mechanism 310 and/or the at least one second temperature change mechanism 320 e.g. via a heat switch 340 to allow a transfer of heat Q between the thermal reservoir 330 and the sample stage 20 and/or the at least one first temperature change mechanism 310 and/or the at least one second temperature change mechanism 320.

The sample stage 20 may be configured to support a sample or a sample holder having a sample attached thereto such that the sample and/or sample holder are in thermal contact with the sample stage 20. Thereby, the sample and/or sample holder have essentially the same temperature as the sample stage 20.

The term "temperature at (or of) the sample stage" may refer to an actual temperature of the sample stage (or the sample and/or sample holder) as measured, for example, by one or more thermometers attached to the sample stage and/or sample and/or sample holder, such as resistive NTC thermometers.

For example, the temperature at (or of) the sample stage can be a target temperature which is to be achieved and stably maintained and/or controlled by the cryogenic apparatus 300. For example, the target temperature can be a temperature of the *n^{th}* adiabatic demagnetization unit of an ADR system, which may be a last stage of a chain of adiabatic demagnetization units. The last stage can be connected to, or be, the sample stage 20.

In some embodiments, the thermal reservoir 330 is a pre-cooling stage which provides an essentially constant temperature. In particular, the thermal reservoir 330 may have a cooling capacity which is considerable larger than a cooling capacity of the temperature change mechanism used to cool the sample stage 20 in a temperature range below the temperature of the thermal reservoir 330.

According to some embodiments, which can be combined with other embodiments described herein, the essentially constant temperature provided by the thermal reservoir 330 may be in a range between 1K (Kelvin) and 100K, or in a range between 1K and 80K, or in a range between 1K and 10K, or in a range between 1K and 5K, or in a range between 5K and 10K, or in a range between 5K and 80K. Additionally, or alternatively, the essentially constant temperature provided by the thermal reservoir 330 may be larger than 1K and/or less than 5K. In a particular non-limiting example, the essentially constant temperature provided by the thermal reservoir 330 may be about 4K and/or around the temperature of liquid He-4.

In some embodiments, the thermal reservoir 300 can be provided by a pulse tube refrigerator and/or an ADR system and/or a liquid Helium bath.

Control by the controller can be software-based, using thermometers, power supplies, and other peripherals as inputs and/or outputs, such as current sources. In particular, the controller can be configured to ramp the temperature of the sample stage 20 by controlling at least the at least one first temperature change mechanism 310 and the at least one second temperature change mechanism 320. For example, the controller may be configured to change or ramp the (target) temperature from a first (target) temperature to a second (target) temperature or vice versa. Thus, the controller may provide a target temperature gradient over time (i.e., a temperature change rate, e.g., K/min or K/h).

In non-limiting embodiments, the controller may implement a proportional-integral-derivative (PID) control.

The controller is configured to operate the at least one first temperature change mechanism 310 in a first temperature range to change the temperature at the sample stage 20; operate the at least one second temperature change mechanism 320 in a second temperature range different from the first temperature range to change the temperature at the sample stage 20; and operate both the at least one first temperature change mechanism 310 and the at least one second temperature change mechanism 320 in a third temperature range between the first temperature range and the second temperature range to change the temperature at the sample stage 20.

Accordingly, the at least one first temperature change mechanism 310 is not operated in the second temperature range to change the temperature at the sample stage 20. Similarly, the at least one second temperature change mechanism 320 is not operated in the first temperature range to change the temperature at the sample stage 20. In the third temperature range, however, the at least one first temperature change mechanism 310 and the at least one second temperature change mechanism 320 are operated, particularly simultaneously, to change the temperature at the sample stage 20.

It is to be understood that the expressions "operate the at least one first temperature change mechanism ... to change the temperature at the sample stage" and "operate the at least one second temperature change mechanism ... to change the temperature at the sample stage" mean that the at least one first temperature change mechanism 310 and the at least one second temperature change mechanism 320 are operated to actively change the temperature at the sample stage 20 by actively heating or cooling the sample stage 20.

However, in some embodiments, the at least one first temperature change mechanism 310 can be operated in at least a part of the second temperature range (adjacent to or bordering the third temperature range) in a stand-by mode and/or a preparation mode without changing the temperature at the sample stage 20. Similarly, the at least one second temperature change mechanism 320 can be operated in at least a part of the first temperature range (adjacent to or bordering the third temperature range) in a stand-by mode and/or a preparation mode without changing the temperature at the sample stage.

According to some embodiments, which can be combined with other embodiments described herein, the at least one first temperature change mechanism 310 and the at least one second temperature change mechanism 320 are selected from the group including a heating mechanism, a cooling mechanism, and combinations thereof (e.g., a heating and cooling mechanism, such as a magnetic heating and cooling mechanism).

In particular, the at least one first temperature change mechanism 310 and/or the at least one second temperature change mechanism 320 may be a heater, such as a resistive heater. Additionally, or alternatively, the at least one first temperature change mechanism 310 and/or the at least one second temperature change mechanism 320 may be an adiabatic demagnetization refrigerator.

The adiabatic demagnetization refrigerator may include at least one adiabatic demagnetization unit ("ADR stage"), particularly a plurality of adiabatic demagnetization units, to implement ADR or CADR. In some implementations, a temperature of each individual ADR unit is measured using a temperature sensor, such as a low-temperature sensor. The low-temperature sensor may be a resistive NTC thermometer but is not limited thereto.

Preferably, the adiabatic demagnetization refrigerator is a single-stage ADR. Alternatively, the adiabatic demagnetization refrigerator can be a multi-stage ADR. The stages of the multi-stage ADR may be connectable in series, for example by thermal switches.

In some embodiments, the at least one first temperature change mechanism 310 and the at least one second temperature change mechanism 320 can be of a different functional type. The term "functional type" as used in the present disclosure refers to a physical principle by which the temperature change mechanism operates to achieve cooling and/or heating. For example, the at least one first temperature change mechanism 310 can be a heating mechanism, such as a resistive heater, and the at least one second temperature change mechanism 320 can be a heating and cooling mechanism, such as an adiabatic demagnetization refrigerator.

In other embodiments, the at least one first temperature change mechanism 310 and the at least one second temperature change mechanism 320 can be of a same functional type. For example, the at least one first temperature change mechanism 310 and the at least one second temperature change mechanism 320 can be (e.g., resistive) heaters or ADRs.

In particular, the at least one first temperature change mechanism 310 can have at least one first operational characteristic and the at least one second temperature change mechanism 320 can have at least one second operational characteristic different from the at least one first operational characteristic. Preferably, the at least one first operational characteristic and the at least one second operational characteristic are selected from the group including a heating power, a maximal heating power, an operational limit of the temperature change mechanism, a size of the temperature change mechanism, a heat input characteristic to the sample stage, and combinations thereof.

According to some embodiments, which can be combined with other embodiments described herein, the cryogenic apparatus 300 further includes at least one heat switch. The heat switch may be a mechanical heat switch, an electromechanical heat switch, an electrocaloric heat switch, a liquid crystal heat switch, a gas gap heat switch, a superconducting heat switch, or a combination thereof.

As shown in FIG. 3, the at least one heat switch may include at least one first heat switch 340 configured to open and close a thermal connection between the thermal reservoir 330 and the sample stage 20. In an exemplary embodiment, the at least one first heat switch 340 can be further configured to open and close a thermal connection between the thermal reservoir 330 and the at least one first temperature change mechanism 310 and/or the at least one second temperature change mechanism 320.

Additionally, or alternatively, the at least one heat switch may include at least one second heat switch (not shown) configured to open and close a thermal connection between the thermal reservoir 330 and the at least one first temperature change mechanism 310.

Additionally, or alternatively, the at least one heat switch may include at least one third heat switch (not shown) configured to open and close a thermal connection between the thermal reservoir 330 and the at least one second temperature change mechanism 320.

Further and/or other heat switches can be provided at different locations of the cryogenic apparatus 300 to control heat transfer between different elements of the cryogenic apparatus 300.

According to some embodiments, which can be combined with other embodiments described herein, the at least one heat switch, in particular the at least one first heat switch 340, can be controllable to provide a variable thermal impedance. Thereby, a heat transfer between different elements of the cryogenic apparatus 300 can be variably controlled.

In view of the above, the cryogenic apparatus 300 of the present disclosure may combine a pre-thermalized temperature bath with an arbitrary number of heating/cooling devices, each with different characteristics. Based on device-specific constraints, such as maximum fields and/or currents, compliance and/or maximal temperature, and thus individual operating ranges, a continuous transition can be performed from a technology reaching a limit to an appropriate heating/cooling technology for the given operation range. This can be done continuously over the entire working range of the cryostat.

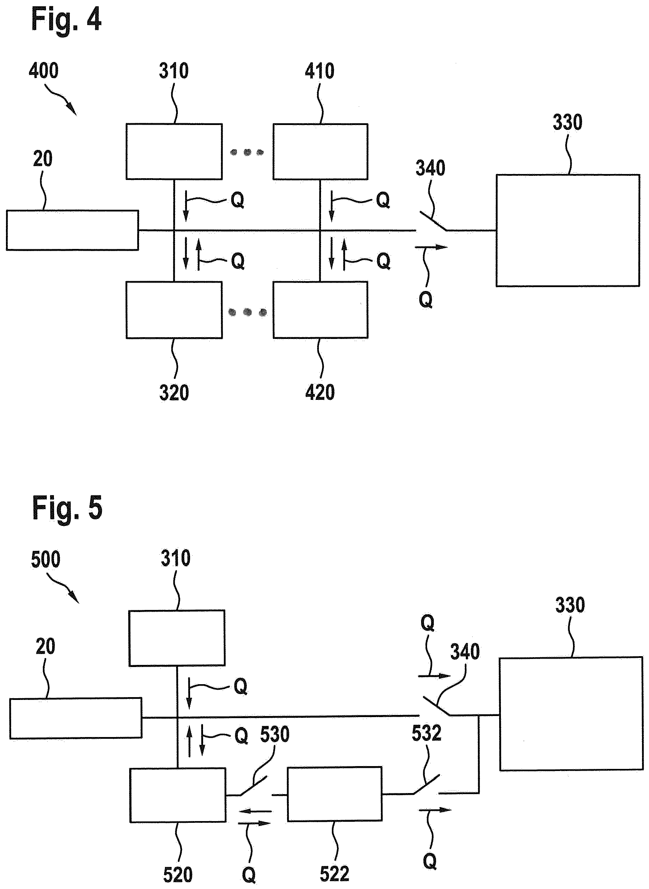

FIG. 4 shows a cryogenic apparatus 400 according to further embodiments of the present disclosure.

The cryogenic apparatus 400 includes two first temperature change mechanisms 310 and 410 and includes two second temperature change mechanisms 320 and 420. Although two first temperature change mechanisms 310 and 410 and two second temperature change mechanisms 320 and 420 are shown in FIG. 4, it is to be understood that any number of first temperature change mechanisms and any number of second temperature change mechanisms can be provided.

The two first temperature change mechanisms 310 and 410 may be of the same functional type. For example, the two first temperature change mechanisms 310 and 410 may be heaters, such as resistive heaters. This is illustrated in FIG. 4 by the arrow indicating a unidirectional heat flow.

Additionally, or alternatively, the two second temperature change mechanisms 320 and 420 may be of the same functional type. For example, the two second temperature change mechanisms 320 and 420 may be ADRs, such as single-stage or multi-stage ADRs. This is illustrated in FIG. 4 by the arrows indicating a bidirectional heat flow as ADRs may provide magnetic cooling as well as magnetic heating.

In some embodiments, the first temperature change mechanisms and the second temperature change mechanisms are thermally connected in parallel, as it is illustrated in FIG. 4.

FIG. 5 shows a cryogenic apparatus 500 according to further embodiments of the present disclosure.

The cryogenic apparatus 500 includes one first temperature change mechanisms 310 and two second temperature change mechanisms 520 and 522. Although one first temperature change mechanism 310 and two second temperature change mechanisms 520 and 522 are shown in FIG. 5, it is to be understood that any number of first temperature change mechanisms and any number of second temperature change mechanisms can be provided.

The first temperature change mechanism 310 may be a heater, such as a resistive heater. This is illustrated in FIG. 5 by the arrow indicating a unidirectional heat flow.

In some embodiments, the two second temperature change mechanisms 520 and 522 may be ADRs. For example, the second temperature change mechanisms 520 may be a single-stage or multi-stage ADR. Additionally, or alternatively, the other second temperature change mechanisms 522 may be a single-stage or multi-stage ADR. In particular, both second temperature change mechanisms 520 and 522 may be single-stage ADRs, or both second temperature change mechanisms 520 and 522 may be multi-stage ADRs. In further embodiments, the second temperature change mechanisms 520 and 522 configure one multi-stage ADR (in this case the second temperature change mechanisms 520 may be a controller ADR stage and the second temperature change mechanisms 522 may be a regenerator ADR stage).

According to some embodiments, which can be combined with other embodiments described herein, at least one heat switch may be configured to open and close at least one thermal connection between two or more devices comprised in the at least one second temperature change mechanism. In the example of FIG. 5, the second temperature change mechanisms 520 and 522 are connected in series by a heat switch 530. Yet, the first temperature change mechanisms on the one side and the second temperature change mechanisms on the other side may be thermally connected in parallel, as it is illustrated in FIG. 5.

In addition, a further heat switch 532 can be provided which is configured to open and close at least one thermal connection between the at least one second temperature change mechanism, such as the second temperature change mechanism 522, and the thermal reservoir 330.

One or more of the heat switches shown in FIG. 5 can be controllable to provide a variable thermal impedance. Thereby, a heat transfer between different elements of the cryogenic apparatus 500 can be variably controlled.

In the following, exemplary processes for changing a sample temperature according to embodiments of the present disclosure are described.

The cryogenic apparatus of the present disclosure is configured to change or ramp a target temperature from a first target temperature to a second target temperature or vice versa. Thus, the cryogenic apparatus may provide a target temperature gradient over time (i.e., a temperature change rate, e.g., K/min or K/h). For example, the cryogenic apparatus can be configured to control the target temperature within a predetermined temperature range. The predetermined temperature range may be 5mK to 0.5K, particularly 5mK to 1K, particularly 5mK to 4K, particularly 5mK to 10K, particularly 5mK to 100K, and more particularly 5mK (or 50mK or 100mK or 300mK) to 300K (e.g., room temperature).

The cryogenic apparatus of the present disclosure may include three major components: a (passive) pre-cooling unit which constantly provides cooling power to ensure a low enough bath temperature, a controllable (active) heating unit and a controllable (active) cooling unit. The active units can be used to control temperatures over a full temperature range of the cryogenic apparatus. To (dis-)connect the active units from pre-cooling, at least one switchable connector, such as a heat switch, can be provided.

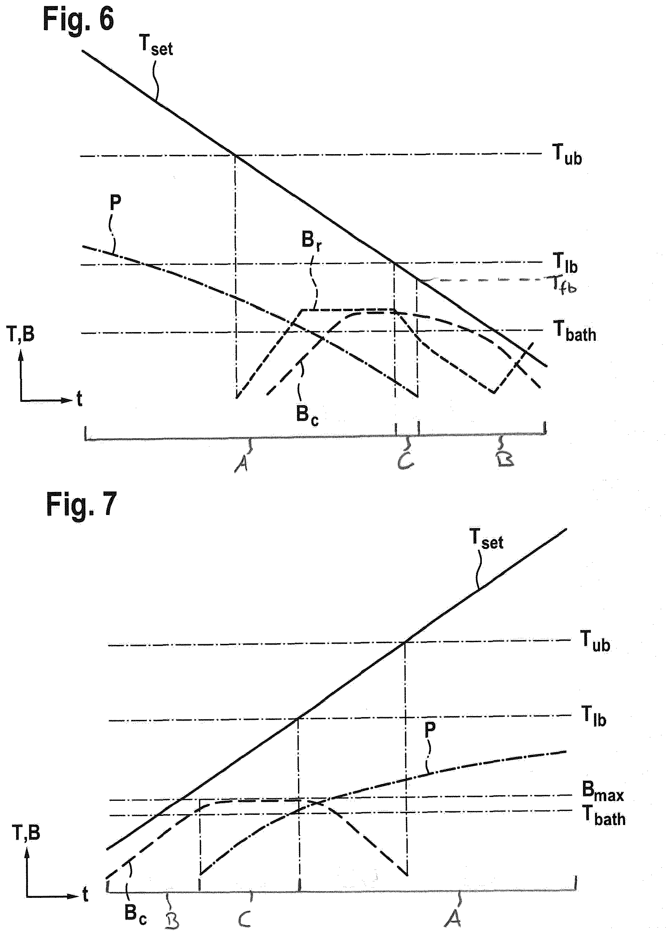

FIG. 6 shows an exemplary temperature ramp according to an embodiment of the present disclosure. The x-axis denotes time t, and the y-axis denotes a temperature T and a magnetic field B. The temperature ramp can be realized using, for example, the cryogenic apparatus of FIG. 5.

The present disclosure distinguished between three temperature ranges:
1. A first temperature range A in which only the at least one first temperature change mechanism, such as a resistive heater, is operated to change the target temperature Tₛₑₜ
2. A second temperature range B in which only the at least one second temperature change mechanism, such as an ADR system, is operated to change the target temperature Tₛₑₜ
3. A third temperature range C between the first temperature range A and the second temperature range B in which both the at least one first temperature change mechanism and the at least one second temperature change mechanism are operated ("hybrid mode") to change the target temperature Tₛₑₜ.

The first temperature range A, the second temperature range B and the third temperature range C do not overlap and may be adjacent to each other with the first temperature range A being the highest temperature range. The endpoints of the temperature ranges can be selected in various ways, e.g., depending on a temperature of the thermal reservoir, operational characteristics and/or limits of the at least one first temperature change mechanism and the at least one second temperature change mechanism, and the like. It is noted that the x-axis in FIG. 6 denotes the time t to better illustrate the ramping, so that also the temperature ranges are shown over time.

In the first temperature range A above bath temperature T_{bath}, at least one resistive heater can be used to control the temperature ramp. In particular, to decrease the target temperature, the sample stage may be connected to the pre-cooling unit (thermal reservoir at bath temperature T_{bath}) which provides cooling power. To increase the target temperature, the sample stage can be disconnected from the pre-cooling unit. The cooling/heating rate can be controlled by a defined heat input provided by the at least one resistive heater.

In the second temperature range B, at least one ADR unit or stage can be used to control the temperature ramp. In particular, the at least one ADR unit or stage can be configured for magnetic heating (increasing magnetic field) and/or magnetic cooling (decreasing magnetic field).

The third temperature range C provides a transition or handshake between the techniques by simultaneously operating both techniques, such as the resistive heater and the ADR stage(s), dependent from each other.

Turning now to FIG. 6, a decreasing target temperature Tₛₑₜ is shown. The x-axis denotes time t, and the y-axis denotes a temperature T and a magnetic field B.

In the first temperature range A, the heat switch (e.g., heat switch 340 in FIGs. 3-5) connecting the sample stage and the thermal reservoir at bath temperature T_{bath} is closed and only the heater supplies heating power P to change the target temperature Tₛₑₜ. The heat switch can be controllable to provide a variable thermal impedance. Thereby, heating power required to control the temperature ramp can be reduced.

Once the temperature reaches a first threshold (or upper bound) temperature T_{ub}, the ADR system is prepared in the first temperature range A for operation. The preparation of the ADR system takes place while the target temperature Tₛₑₜ is still within the first temperature range A so that the ADR system is ready for temperature control once the target temperature Tₛₑₜ reaches the third temperature range C. In FIG. 6 B_{c} denotes a controller magnetic field (e.g., the ADR stage 520 in FIG. 5) and Bᵣ denotes regenerator magnetic field (e.g., the ADR stage 522 in FIG. 5) of a multi-stage ADR system.

When the target temperature Tₛₑₜ reaches a second threshold (or lower bound) temperature Tib, the system enters the third temperature range C. In the third temperature range C, the heater fades out and the ADR system is operated such that the heater and the ADR system together control the temperature ramp. The heat switch (e.g., heat switch 340 in FIGs. 3-5) can be opened at some point to disconnect the sample stage from the thermal reservoir. For example, the heat switch can be opened at the beginning, the end, or anywhere within the third temperature range C.

Finally, when the target temperature Tₛₑₜ reaches a third threshold (further bound) temperature Tfb and enters the second temperature range B, only the ADR system is operated to control the temperature ramp.

In the above example, the first threshold temperature T_{ub} indicates a temperature at which the preparation of the ADR system starts. The first threshold temperature T_{ub} can be selected based on operational characteristics and/or limits of the ADR system, such as a superconducting transition temperature of its magnet coil(s). For example, above the first threshold temperature T_{ub} it is not allowed to apply current to the magnet coil(s).

The second threshold temperature T_{lb} indicates a temperature which separates the first temperature range A from the third temperature range C. The second threshold temperature T_{lb} can be selected based on operational characteristics and/or limits of the ADR system and/or the resistive heater. For example, above the second threshold temperature T_{lb} it may not be possible to safely operate the ADR system. In particular, T_{lb} can be selected considering that the magnetocaloric effect in the cooling medium becomes too weak so that only insufficient cooling/heating effects are achieved with ADR above this temperature.

The third threshold temperature Tfb indicates a temperature which separates the third temperature range C from the second temperature range B. The third threshold temperature Tfb can be selected based on operational characteristics and/or limits of the ADR system. For example, the third threshold temperature Tfb can be selected to provide a range below T_{lb} to allow the heater to run out smoothly. In some embodiments, the third threshold temperature Tfb may be around, in particular above, the temperature T_{bath} of the thermal reservoir.

FIG. 7 shows an exemplary temperature ramp according to a further embodiment of the present disclosure. The x-axis denotes time t, and the y-axis denotes a temperature T and a magnetic field B. The temperature ramp can be realized using, for example, the cryogenic apparatus of FIG. 3, 4 and/or 5.

FIG. 7 shows an increasing target temperature Tₛₑₜ in a case in which the ADR field B_{c} approaches an upper (operating) limit Bₘₐₓ.

In the second temperature range B, only the ADR system is operated to control the temperature ramp. When the ADR field B_{c} approaches the upper operating limit Bₘₐₓ, above which magnetic heating is no longer possible, the system enters the third temperature range C in which the ADR system starts to fade out and the heater takes over.

When the target temperature Tₛₑₜ reaches the second threshold temperature T_{lb} and the system enters the first temperature range A, the ADR system is disabled and/or shutdown and/or in standby (there may still be current in the magnet coils), and the heater completely takes over the control of the temperature ramp.

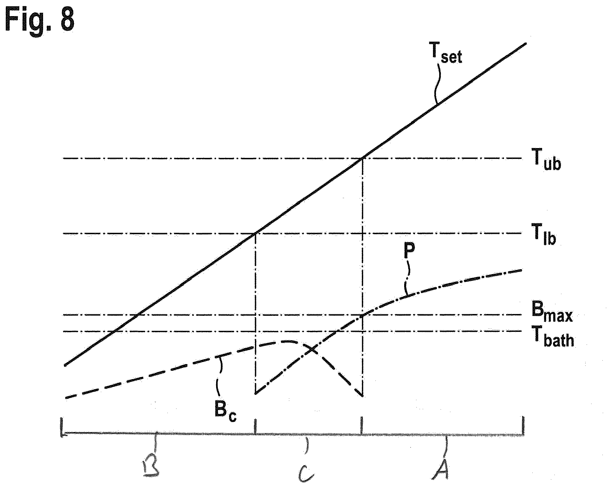

FIG. 8 shows an exemplary temperature ramp according to a further embodiment of the present disclosure. The x-axis denotes time t, and the y-axis denotes a temperature T and a magnetic field B. The temperature ramp can be realized using, for example, the cryogenic apparatus of FIG. 3, 4 and/or 5.

FIG. 8 shows an increasing target temperature Tₛₑₜ in a case in which the target temperature Tₛₑₜ approaches the second threshold temperature Tib.

In the second temperature range B, only the ADR system is operated to control the temperature ramp. When the target temperature Tₛₑₜ approaches the second threshold temperature Tib, the system enters the third temperature range C in which the ADR system starts to fade out and the heater takes over.

When the target temperature Tₛₑₜ reaches the first threshold temperature T_{ub} and the system enters the first temperature range A, the ADR system is disabled and/or shutdown and/or in standby (there may still be current in the magnet coils), and the heater completely takes over the control of the temperature ramp.

FIGs. 6, 7 and 8 show the first temperature range A, the second temperature range B, and the third temperature range C. These temperature ranges, in particular the upper boundaries and/or lower boundaries thereof, can be fixed or can be variable. Preferably, the temperature ranges, in particular the upper boundaries and/or lower boundaries thereof, are variable and may change for various reasons, such as operational parameters and/or states of the system components. For example, in FIG. 7 the third temperature range C begins because the field limit of the ADR is reached. Therefore, the upper boundaries and/or lower boundaries of the temperature ranges may shift, particularly during operation of the cryogenic apparatus, depending on the circumstances.

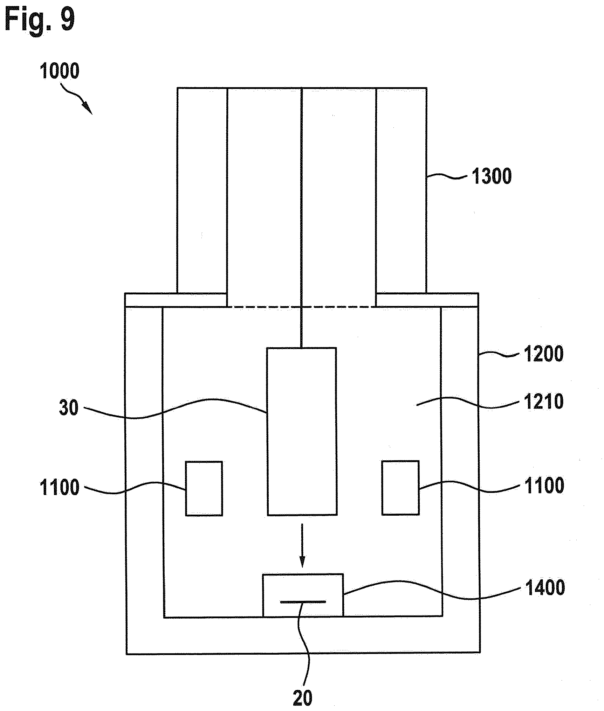

FIG. 9 shows a schematic view of a cryostat 1000 having cryogenic apparatus 1100 according to the embodiments described herein. The cryostat 1000 can be a cryogen-free cryostat.

The cryostat 1000, in particular the cryogenic apparatus 1100, includes a controller which includes one or more processors and a memory coupled to the one or more processors and comprising instructions executable by the one or more processors to control the cryogenic apparatus 1100 such that:
(i) in a first temperature range, only at least one first temperature change mechanism connected to a sample stage 20 is operated to change a temperature at the sample stage 20;
(ii) in a second temperature range different from the first temperature range, only at least one second temperature change mechanism connected to the sample stage 20 is operated to change the temperature at the sample stage 20, wherein the at least one second temperature change mechanism is different from the at least one first temperature change mechanism; and
(iii) in a third temperature range between the first temperature range and the second temperature range, both the at least one first temperature change mechanism and the at least one second temperature change mechanism are operated to change the temperature at the sample stage 20.

The cryostat 1000 includes a vacuum chamber 1200 and the cryogenic apparatus 1100 of the embodiments of the present disclosure.

The vacuum chamber 1200 has an interior space 1210 which is configured to contain a vacuum. The vacuum chamber 1200 seals the interior space 1210 from the outside essentially gas-tight, vacuum-tight, heat-impermeable, and/or radiation-impermeable. Optionally, the vacuum chamber 1200 may electrically insulate the interior space 1210 from the outside.

A vacuum is generally understood as a space essentially devoid of matter. The term "vacuum" as used throughout the present application is in particular understood as a technical vacuum, i.e., a region with a gaseous pressure much less than atmospheric pressure. The vacuum inside the vacuum chamber 1200 can be high vacuum or ultra-high vacuum. One or more vacuum generation sources, such as turbo pumps and/or cryo pumps (not shown), can be connected to the vacuum chamber 1200 to generate the vacuum.

According to some embodiments, the cryostat 1000 may be provided to measure one or more physical characteristics of a sample at low or ultra-low temperatures. The one or more physical characteristics may include, but are not limited to, magnetization, resistivity, and conductivity. Optionally, the one or more physical characteristics of the sample can be measured under external conditions, such as external magnetic fields and/or pressure. The sample may be loaded into the vacuum chamber 1200 and unloaded from the vacuum chamber 1200 using a sample transfer mechanism 30.

The term "sample" as used throughout the present disclosure includes, but is not limited to, scientific materials, electronics (e.g., superconducting electronics), active devices, passive devices, processing units, and combinations thereof.

The cryostat 1000 may include an access port 1300 having an inner space and a vacuum lock. The vacuum lock may seal the interior space 1210 from the inner space of the access port 1300 essentially vacuum-tight in a closed state and may allow an access to the interior space 1210 in an open state.

For example, the vacuum lock can be closed and a sample holder having the sample attached thereto can be placed in the inner space of the access port 1300, e.g., under atmospheric pressure. The inner space of the access port 1300 can be sealed from the outside and a technical vacuum can be generated in the inner space. Then, the vacuum lock can be opened to connect the interior space 1210 of the vacuum chamber 1200 and the inner space of the access port 1300. The sample holder can be inserted into the vacuum chamber 1200 using the sample transfer mechanism 30. The sample holder can be mechanically attached to a base 1400 (e.g., including or being the sample stage 20), the sample holder can be released from the sample transfer mechanism 30, and the sample transfer mechanism 30 can be removed from the inner space 1210. The vacuum lock can be closed and the cryostat 1000 can be operated to examine the sample on the sample holder. The access port 1300 and/or the sample loading mechanism 30 are optional though and other means to provide the sample inside the cryostat can be used.

The cryostat 1000 can be configured to provide temperatures inside of the vacuum chamber in a range between 5mK and 300K, particularly in a range between 5mK and 250K, particularly in a range between 5mK and 200K, particularly in a range between 5mK and 150K, particularly in a range between 5mK and 100K, and more particularly in a range between 5mK and about 70K. In some implementations, even if the system is a cryostat, temperatures up to room temperature can be provided to conduct measurements on samples.

According to some embodiments, which can be combined with other embodiments described herein, the cryostat 1000 includes, or is, an adiabatic demagnetization refrigerator, and in particular a multi-stage adiabatic demagnetization refrigerator. The multi-stage adiabatic demagnetization refrigerator may be configured to operate at 1K or below, particularly at 500mK or below, particularly at 100mK or below, and particularly at 50mK or below. However, as mentioned above, the present disclosure is not limited thereto and the cryostat 1000 can be operated at higher temperatures, i.e., temperatures of 1K or higher, e.g., up to room temperature.

While the foregoing is directed to embodiments of the disclosure, other and further embodiments of the disclosure may be devised without departing from the basic scope thereof, and the scope thereof is determined by the claims that follow.

## Claims

1. A cryogenic apparatus (300, 400, 500), comprising:
at least one first temperature change mechanism (310, 410) connected to a sample stage (20) and configured to change a temperature at the sample stage (20);
at least one second temperature change mechanism (320, 420, 520, 522) different from the at least one first temperature change mechanism (310, 410), wherein the at least one second temperature change mechanism (320, 420, 520, 522) is connected to the sample stage (20) and configured to change the temperature at the sample stage (20); and
a controller configured to:
i) operate the at least one first temperature change mechanism (310, 410) in a first temperature range (A);
ii) operate the at least one second temperature change mechanism (320, 420, 520, 522) in a second temperature range (B) different from the first temperature range (A); and
iii) operate both the at least one first temperature change mechanism (310, 410) and the at least one second temperature change mechanism (320, 420, 520, 522) in a third temperature range (C) between the first temperature range (A) and the second temperature range (B).

2. The cryogenic apparatus (300, 400, 500) of claim 1, wherein the at least one first temperature change mechanism (310, 410) and the at least one second temperature change mechanism (320, 420, 520, 522) are selected from the group consisting of an active heating mechanism, a passive heating mechanism, an active cooling mechanism, a passive cooling mechanism, and combinations thereof.

3. The cryogenic apparatus (300, 400, 500) of claim 2, wherein:
the at least one first temperature change mechanism (310, 410) is a heating mechanism; and
the at least one second temperature change mechanism (320, 420, 520, 522) is a heating and cooling mechanism.

4. The cryogenic apparatus (300, 400, 500) of any one of claims 1 to 3, wherein:
the at least one first temperature change mechanism (310, 410) and the at least one second temperature change mechanism (320, 420, 520, 522) are of a different functional type; and/or
the at least one first temperature change mechanism (310, 410) includes at least one heater, in particular a resistive heater; and/or
the at least one second temperature change mechanism (320, 420, 520, 522) includes at least one adiabatic demagnetization refrigerator, ADR, stage.

5. The cryogenic apparatus (300, 400, 500) of any one of claims 1 to 4, wherein:
the at least one second temperature change mechanism (320, 420, 520, 522) includes, or is, one or more single-stage ADRs; or
the at least one second temperature change mechanism (320, 420, 520, 522) includes, or is, one or more multi-stage ADRs.

6. The cryogenic apparatus (300) of any one of claims 1 to 3, wherein:
the at least one first temperature change mechanism (310, 410) and the at least one second temperature change mechanism (320, 420, 520, 522) are of a same functional type; and/or
the at least one first temperature change mechanism (310, 410) has at least one first operational characteristic and the at least one second temperature change mechanism (320, 420, 520, 522) has at least one second operational characteristic different from the at least one first operational characteristic; and/or
the at least one first temperature change mechanism (310, 410) includes at least one first heater, in particular at least one first resistive heater, and the at least one second temperature change mechanism (320, 420, 520, 522) includes at least one second heater, in particular at least one second resistive heater.

7. The cryogenic apparatus (300, 400, 500) of any one of claims 1 to 6, further comprising a thermal reservoir (330) connectable to the sample stage (20) and configured to act as a heat sink, in particular wherein the thermal reservoir (330) is provided by at least one of:
- a closed-cycle cryocooler;
- a pulse tube refrigerator;
- an ADR system;
- a liquid Helium bath;
- a Stirling cryocooler;
- a Gifford-McMahon cryocooler;
- a dilution refrigerator;
- a Joule Thompson cooler;
- a He-4 flow cryostat; and
- a He-3 flow cryostat.

8. The cryogenic apparatus (300, 400, 500) of claim 7, further comprising at least one heat switch, wherein the at least one heat switch includes:
- at least one first heat switch (340) configured to open and close a thermal connection between the thermal reservoir (330) and the sample stage (20); and/or
- at least one second heat switch configured to open and close a thermal connection between the thermal reservoir (330) and the at least one first temperature change mechanism (310, 410); and/or
- at least one third heat switch (532) configured to open and close a thermal connection between the thermal reservoir (330) and the at least one second temperature change mechanism (320, 420, 520, 522); and/or
- at least one fourth heat switch (530) configured to open and close at least one thermal connection between two or more devices (520, 522) comprised in the at least one second temperature change mechanism, in particular wherein the two or more devices (520, 522) are ADR stages.

9. The cryogenic apparatus (300, 400, 500) of claim 8, wherein the at least one first heat switch (340) is further configured to open and close a thermal connection between the thermal reservoir (330) and at least one of the at least one first temperature change mechanism (310, 410) and the at least one second temperature change mechanism (320, 420, 520, 522).

10. The cryogenic apparatus (300, 400, 500) of claim 8 or 9, wherein the at least one heat switch, in particular the at least one first heat switch (340), is controllable to provide a variable thermal impedance.

11. The cryogenic apparatus (300, 400, 500) of any one of claims 1 to 10, wherein the controller is configured to prepare the at least one second temperature change mechanism (320, 420, 520, 522) in at least a part of the first temperature range (A) for operation.

12. The cryogenic apparatus (300, 400, 500) of any one of claims 1 to 11, wherein the controller is configured to operate the at least one first temperature change mechanism (310, 410) and the at least one second temperature change mechanism (320, 420, 520, 522) to ramp the temperature at the sample stage (20) between a first temperature and a second temperature, preferably wherein the first temperature is 100K or higher and the second temperature is 4K or lower.

13. A method of controlling a cryogenic apparatus, in particular the cryogenic apparatus of any one of claims 1 to 12, comprising:
in a first temperature range, operating only at least one first temperature change mechanism connected to a sample stage to change a temperature at the sample stage;
in a second temperature range different from the first temperature range, operating only at least one second temperature change mechanism connected to the sample stage to change the temperature at the sample stage, wherein the at least one second temperature change mechanism is different from the at least one first temperature change mechanism; and
in a third temperature range between the first temperature range and the second temperature range, operating both the at least one first temperature change mechanism and the at least one second temperature change mechanism to change the temperature at the sample stage.

14. A machine readable medium comprising instructions executable by one or more processors to implement the method of claim 13.

15. A controller for a cryogenic apparatus, comprising:
one or more processors; and
a memory coupled to the one or more processors and comprising instructions executable by the one or more processors to implement the method of claim 13.
